Europäisches Patentamt

European Patent Office

Office européen des brevets

(11) Publication number: 0 495 162 A2

# EUROPEAN PATENT APPLICATION

(21) Application number: 91118322.6

(22) Date of filing: 28.10.91

(51) Int. Cl.5: G06F 9/38, G06F 9/34

(30) Priority: 16.01.91 US 642263

(43) Date of publication of application:
22.07.92 Bulletin 92/30

(84) Designated Contracting States:
CH DE ES FR GB IT LI NL SE

(71) Applicant: International Business Machines
Corporation
Old Orchard Road
Armonk, N.Y. 10504(US)

(72) Inventor: Berstis, Viktors
40 Ouaker Hill Drive
Croton-on-Hudson, N.Y. 10520(US)
Inventor: Liptay, John Stephen
1 Troy Drive
Rhinebeck, N.Y. 12572(US)
Inventor: Pedersen, Raymond James
1548 S.W. 5th Avenue
Boca Raton, Florida 33432(US)

(74) Representative: Rudolph, Wolfgang, Dipl.-Ing.
IBM Deutschland GmbH Schönaicher
Strasse 220
W-7030 Böblingen(DE)

(54) Storage management.

(57) In a computer system having a system memory (12), m architected logical register and an array (30) of n physical registers, where n is greater than m, a method of managing storage operands including the steps of: detecting the decoding of an instruction having at least one field specifying a storage operand; identifying an available one of the physical registers; fetching the storage operand from the system memory; loading the storage operand into the available one of the physical registers; and executing the instruction, using the storage operand stored in the one of the physical registers.

FIG.1A

FIG.1B

This invention relates to the management of a computer system according to the preamble of claim 1.

A typical computer system will include an instruction set having instructions that manipulate operands from main storage, from one or more general purpose registers, or from some combination of both. For example, the IBM ESA/370 instruction set includes a first instruction type (RR format) that specifies two general purpose registers, a second instruction type that specifies one general purpose register and one location in indexed storage (RX format), and a third instruction type that specifies two locations in storage (SS format).

Generally, instructions that manipulate data held in the general purpose registers can be processed faster than instructions that need to access main storage. This is because access to main storage typically requires a number machine cycles. In contrast, data held in the general purpose registers is immediately available for instruction execution. Thus, in conventional systems, there is an incentive for programmers to use larger percentages of RR formatted instructions as compared with RX or SS formatted instructions.

The prior art has provided a number of apparatus for increasing the processing speed of RX and SS format instructions. One such apparatus, suited to improve the processing speed of RX type load instructions (RX LOAD), is disclosed in an IBM Technical Disclosure Bulletin article entitled "RESOLVING STORE-LOAD LINKS IN AN INSTRUCTION UNIT" (IBM TDB, Vol. 14, No. 3, August 1971, pp. 868-869). The above-referenced article describes a system which uses additional logic to detect a sequence of instructions, wherein data from a general purpose register specified by R1 is to be stored into an address of main memory calculated by utilizing the X, B and D values of an RX type instruction. If, subsequent to the storage of the data, another RX type instruction specifies that same memory location should be utilized as one of the operands to be loaded into the system, and the data is still valid in the register designated by the previous R1 field, the instruction will be changed to an RR type instruction wherein the data which would normally be accessed from storage will be accessed from the general purpose register, thus saving the time needed for a reference to memory.

An apparatus that uses a similar philosophy to improve the processing speed of RX type store instructions (RX STORE) is described in an IBM Technical Disclosure Bulletin article entitled "LOAD BYPASS FOR ADDRESS ARITHMETIC" (IBM TDB, Vol. 20, No. 9, February 1978, pp. 3606-3607). The above-referenced article describes an apparatus that improves the performance of a "Store" instruction, which uses a given register as an index register, under circumstances where the "Store" instruction immediately follows a "Load" instruction which loads the same register. The apparatus includes a load bypass mechanism such that the data that arrives from the storage buffer (for use by the "Load" instruction) can be bypassed to the address adder via a load bypass register, thus enabling the decode/address generation cycle of the store instruction to occur a cycle earlier.

A more general approach to handling storage operands is disclosed in an IBM Technical Disclosure Bulletin article entitled "OPERAND BUFFER HIT PREDICTION MECHANISM" (IBM TDB, Vol. 30, No. 8, January 1988, pp. 41-43). The above-referenced article describes the use of an operand buffer in a pipeline computer system having a cache memory. The operand buffer stores data which has previously been fetched. From the operand buffer, the data can be re-accessed as though it were part of storage. An operand buffer directory is used to keep track of the effective addresses (in main storage) of operands stored in the operand buffer. By accessing the directory during the address generation cycle, the system determines if the desired operand is in the buffer. If a buffer hit occurs (i.e. the operand is present in the buffer) the cache is not accessed. If a miss occurs, the cache is accessed in a conventional manner.

Another system, which uses an operand history table to fetch operands for instructions with constant operand addresses, is described in an IBM Technical Disclosure Bulletin Article entitled "OPERAND HISTORY TABLE" (IBM TDB Vol. 27, No. 7A, December 1984, pp. 3815-3816). The operand history table holds the instruction address and operand address of each instruction that computes the same operand address each time it is executed. Each entry in the operand history table contains two addresses. The first is the instruction address. The second is the address of the operand for that instruction. Each instruction address fetched by the system's instruction fetch mechanism is sent to the operand history table. If the instruction address is found in the operand history table, the corresponding operand address is fetched. The operand is then matched with the instruction in a pre-decode operand buffer. When the instruction is decoded, the operand associated with the instruction is available, and execution can begin immediately. A check is made to verify that the operand address for that instruction is the same operand address that was stored in the operand history table.

While the above-described apparatus provide an improvement to the performance of some types of instructions, each has its limitations. For example, the first described apparatus (TDB August 1971) will improve the performance of a given RX instruction, only under circumstances where the data in a referenced memory location was put there by a store from a first RX type instruction, and was not changed by any instructions intervening between the first RX instruction (which stored the data) and the given RX instruction (which wants to use the data). Further, the system is not helpful under circumstances where an intervening instruction changes the data in the specified register R1.

The second described apparatus (TDB February 1978) has a utility which is limited to circumstances where a load instruction, that loads a general purpose register with an index value, is followed by a store instruction that uses the same register as an index register.

The third described apparatus (TDB January 1988) is more general than either of the first two solutions, but requires the addition of substantial hardware to form and manage the operand buffer and the operand buffer directory. A similar drawback exists as to the operand history table and associated logic of the fourth described apparatus (TDB December 1984).

Recent developments in computer design, in particular the advent of register renaming and out-of-sequence execution, have added additional complications to the operation of the above described apparatus. In order to describe these complications, a brief overview of register renaming and its relationship to out-of-sequence execution will first be provided.

In systems having register renaming schemes, an array or pool of physical registers is provided to perform functions for a smaller number of architected logical registers. For example, in a given system architecture, an instruction may be able to designate any of 16 general purpose registers (GPR0-GPR15). The physical register array, however, might include 32 physical registers. Thus, if a first instruction designates GPR1 as the recipient of data, the register renaming mechanism will assign one of the physical registers to perform the functions of GPR1 for that instruction. If, for example, a second instruction, following the first instruction, also designated GPR1 to receive data, the register renaming mechanism could assign a different physical register to act as GPR1 for the second instruction, thus avoiding corruption of the data loaded by the first instruction and enabling the central processor to execute instructions out-of-sequence.

An example of a system having a register renaming mechanism is disclosed in U.S. Patent 4,901,233 to John S. Liptay, entitled "COMPUTER SYSTEM WITH LOGIC FOR WRITING INSTRUCTION IDENTIFYING DATA INTO ARRAY CONTROL LISTS FOR PRECISE POST-BRANCH RECOVERIES", which assigned to the same assignee as the present invention. U.S. Patent 4,901,233 is incorporated by reference herein, as if reproduced in full below.

Register renaming and out-of-sequence execution have detrimental effects on each of the first two apparatus. In systems which use register renaming, it is a complex matter to ensure that a register, named in a given load or store instruction, is actually the one of interest to the apparatus (e.g. there may be several physical registers acting as R1, each for a given instruction). Further, in systems where instructions can be sent to the execution unit in an out-of-sequence fashion, the probability of encountering the instruction sequence for which the apparatus were designed is reduced. For example, a load of R3 which is directly followed by a store using R3 as an index in the instruction stream, can end up being executed with a number of intervening load instructions.

In light of the foregoing, it is the object of the present invention to improve the processing speed of RX type instructions of a computer system without the limiting factor of store/load linkage, and to improve the overall processing speed of systems having register renaming schemes, thru the provision of storage operand management in the physical register array.

The solution is described in the characterizing part of claim 1.

In light of these objects, there is provided, in a computer system having a system memory, m architected logical registers and an array of n physical registers wherein n is greater than m, a method of managing storage operands comprising the steps of: detecting the decoding of an instruction having at least one field specifying a storage operand; identifying an available one of the physical registers; fetching the storage operand from the system memory; loading the storage operand into the available one of the physical registers; and executing the instruction, using the storage operand stored in the one of the physical registers.

Further solutions are described in the depending claims.

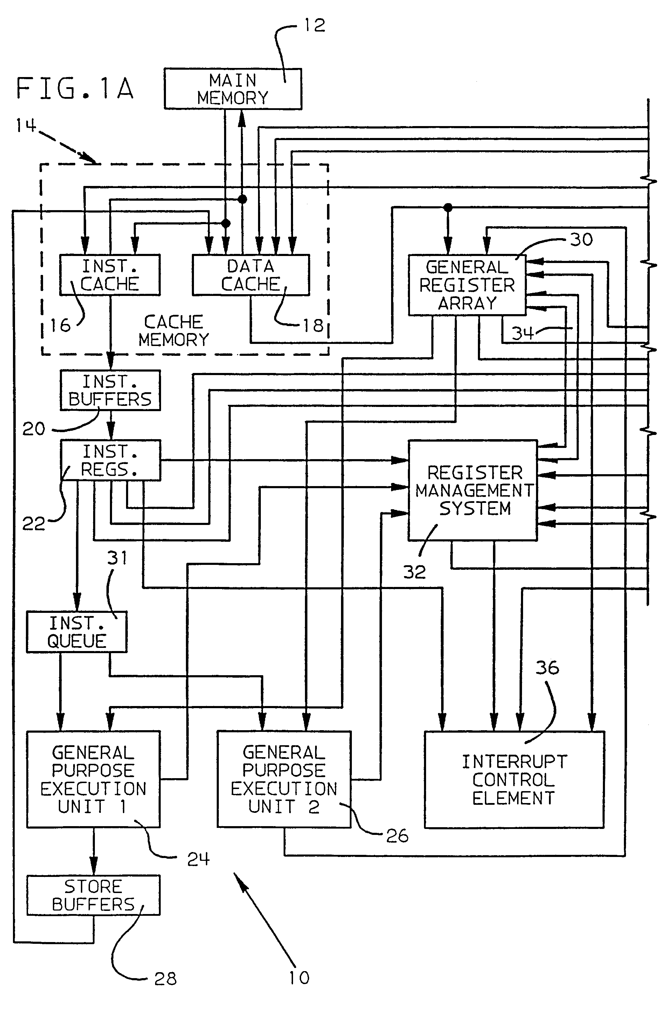

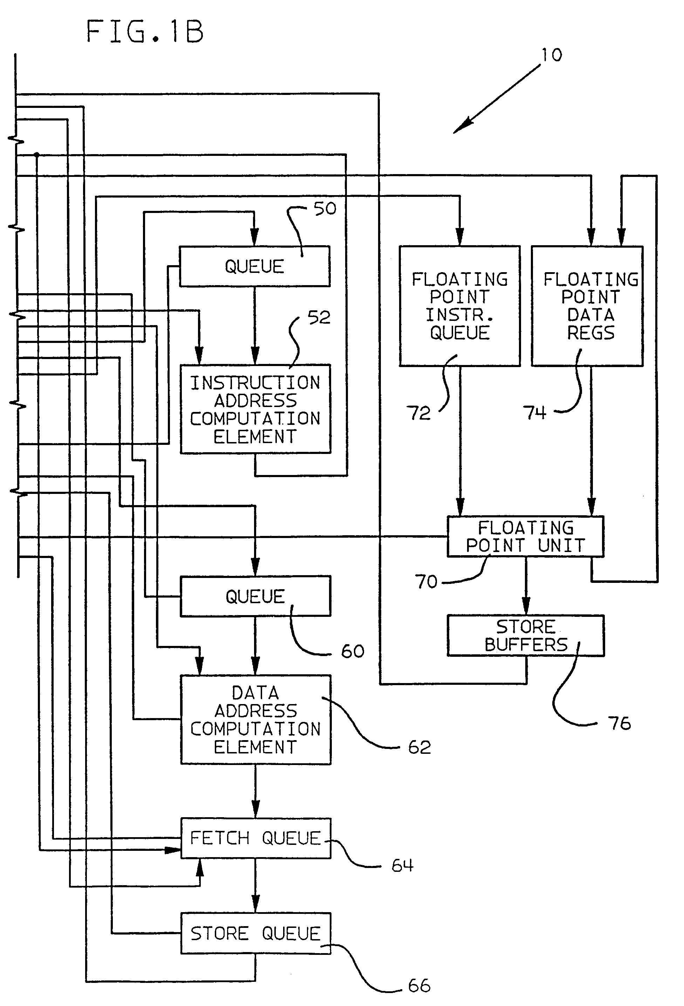

Figs. 1A and 1B
are the left and right halves, respectively, of a drawing of a computer system incorporating register management.
Fig. 2
is a detailed diagram of the register management system of the computer system shown in Fig. 1.
Fig. 3
is a more detailed diagram showing improvements, according to an embodiment of the present invention, to the instruction register/decoder section 22 of the computer system of Fig. 1.

Fig. 4

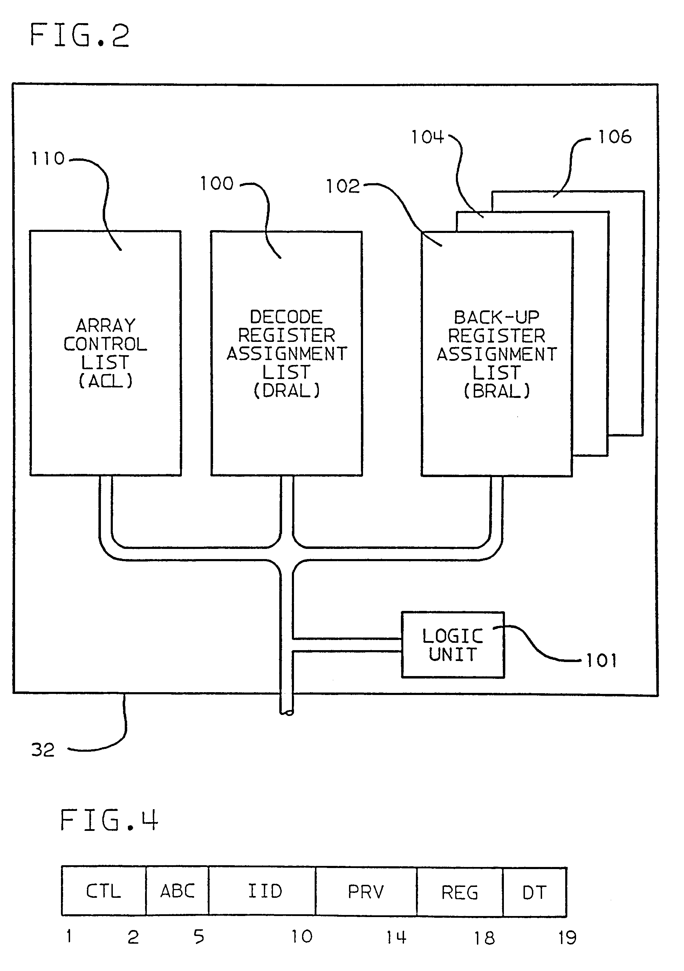

shows the field arrangement for the entries in the ACL of Fig. 2.

Fig. 5

is more detailed diagram, showing the data address computation element 62 of Fig. 1B.

Fig. 6

is a more detailed diagram showing improvements, according to an embodiment of the present invention, to the fetch queue 64 of the computer system of Fig. 1.

Fig. 7

is a flow chart of a storage operand management operation utilizing the principles of the present invention.

Fig. 8

is a diagram of an alternative computer system including an embodiment of storage operand management according to the principles of the present invention.

Fig. 9

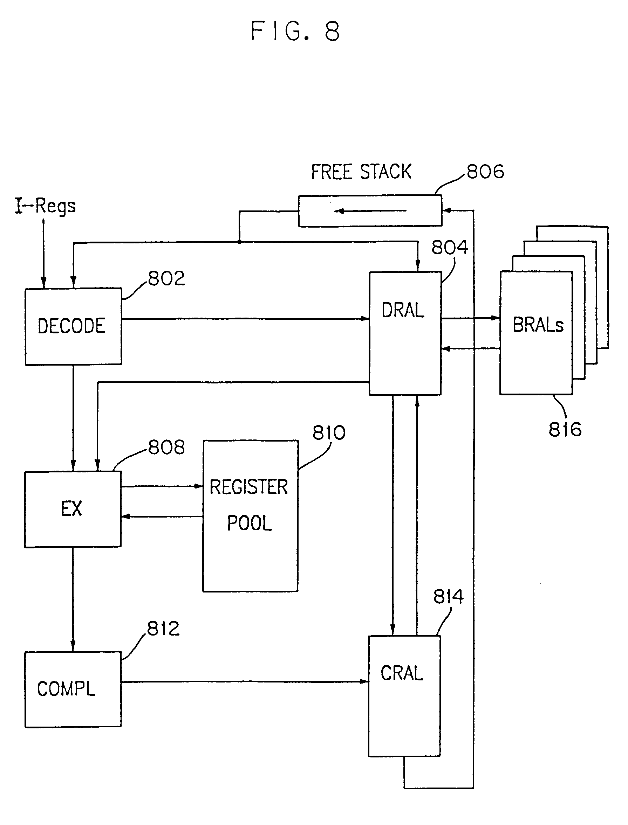

is a detailed diagram of the instruction unit of Fig. 8, also showing interconnections with the cache and instruction buffers.

Fig. 10

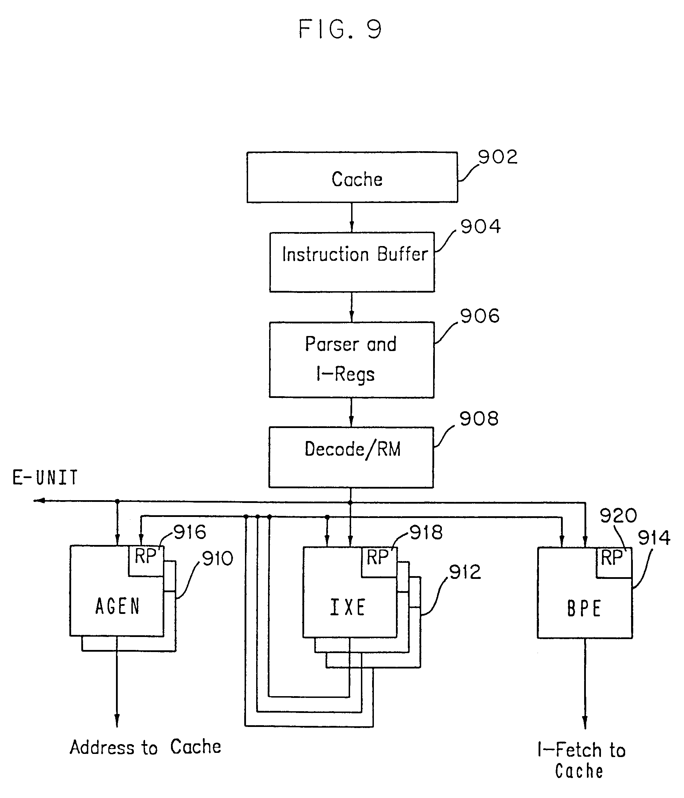

is a detailed diagram of the IXE and associated register pool logic of Fig. 9.

In the preferred embodiment, the present invention is provided part of a central processor having an array of physical registers controlled by a register management system. A suitable processor is described, for example, in U.S. patent 4,901,233 to Liptay. In summary, register management systems provide control for an array of physical registers which can be dynamically assigned to perform functions for a smaller number of architected addressable (logical) registers.

When register management is used in a processor, array positions are assigned, at the time that an instruction is decoded, to receive the results of the instruction. It is not necessary, however, to load anything into such an array position until the result is generated by the instruction during execution. Further, in some systems, unassigned array positions can go unused during an entire execution cycle. The inventors have discovered that both assigned and unassigned array positions can be used as buffers for storage operands during the interval between decoding and the beginning of execution.

Register management systems can be implemented in a variety computer architectures and system environments. An example of a suitable system is illustrated in Figs. 1A and 1B. The computer system 10 of Figs. 1A and 1B includes a main memory 12 connected with a cache memory system 14. The cache memory system 14 may be organized in any number of acceptable ways but is shown in the present example with an instruction cache 16 and a data cache 18 both connected to main memory 12 for separate handling of instruction operations and data operations, respectively. It is known within the field of memory design to provide a cache memory with more than one level to provide both the advantages of memory speed and memory size in a cascaded arrangement and such a memory design, although not shown here, would also be consistent with the present invention.

Instructions pass from the instruction cache 16 through an instruction buffer unit 20 to an instruction register/decoder unit 22. For illustrative purposes, the instruction register/decoder unit 22 has more than one separate instruction registers, and two, three or four are desirable numbers of such instruction registers.

It is known in the field of computer design for a system to have more than one general purpose execution unit. For example, the general purpose units may be designed along the lines of the type of function performed, arithmetic or logical, scalar or vector, scalar or floating point, etc. Because any such arrangement of general purpose execution units makes use of general purpose registers, this invention is applicable to many variations in the number, function arrangement and design of the general purpose execution units in a computer.

For purposes of illustration, the present system is shown with general purpose execution units (GPE) 1 and 2, labeled 24 and 26, respectively. General purpose unit 24 has its output connected to a store buffer unit 28 which in turn has its output connected to data cache 18. General purpose unit 24 may actually be a single execution unit or a combination of units and, as shown in this embodiment, unit 24 produces results which go to store buffer 28 where they are held until instruction completion and then may be stored in memory. General purpose unit 26 has its output connected to a general register array (RA) 30. GPE 26 operates on instructions which produce results which are required to be available in registers rather than immediately stored. An instruction stack or queue 31 is provided to receive instructions from the instruction register unit 22 and direct them appropriately to GPE 24 or 26. Multiple execution units of various types can be used with a single RA and register management system.

In the embodiment of Figs. 1A and 1B, RA 30 contains 32 dynamically assignable real registers to fulfill the functions of 16 GPR's recognized by the architecture.

The RA 30 is controlled by and provides status information to the register management system (RMS) 32 through a control bus 34. The RMS 32 is connected to several other systems in order to receive and provide various types of status information. An interrupt control element 36 is connected to the instruction registers 22, the RMS 32 and the RA 30 to process the proper handling of interrupts and preserve the required status information.

The RMS 32 is connected to the instruction register unit 22 and GPE's 24 and 26 for the purpose of following instructions from issuance through execution and the assignment of registers for input operands and output operands.

The computer in this embodiment has an instruction queue 50 connected to receive instructions from instruction register unit 22 and having an output to instruction address computation element (I-ACE) 52. I-ACE 52 is also connected to receive inputs directly from RA 30 and has an output connected to the instruction cache 16. Instruction queue 50 is connected to the RMS 32 to provide status information.

The computer in this embodiment has an address queue 60 connected to receive an output from the instruction register unit 22. The address queue 60 also has an output connected to the general register array (RA) 30. Another output of address queue 60 is connected as an input to data address computation element (D-ACE) 62. The D-ACE 62 also has an input connected to RA 30. D-ACE 62 is also connected to RMS 32 to provide status information.

The output of D-ACE 62 is connected to address fetch queue 64 which, in turn, has an input and output connected to data cache 18, an output connected as an input to address store queue 66 and another output connected to the interrupt control element 36. The address store queue 66 has an output connected to data cache 18 and has a connection with RMS 32 to provide status information.

The computer in the present embodiment has a floating point arithmetic unit 70 which is also connected to the RMS 32 to provide status information. As will be explained, it is important to note that the RMS 32 can work with units and registers not associated with RA 30. For example, one RMS may work with more than one register array. To be more specific, one RMS may control two RAs which in turn may be connected with multiple execution units of the same or different types.

The inputs to floating point unit (FPU) 70 are provided by a floating point instruction queue 72 and by floating point data registers unit 74. Floating point instruction queue 72 receives its input from I-REG 22. Floating point data register unit 74 receives its input from data cache 18 and from FPU 70.

The output of floating point unit 70 is connected to store buffer unit 76 which has its output connected as an input to data cache 18.

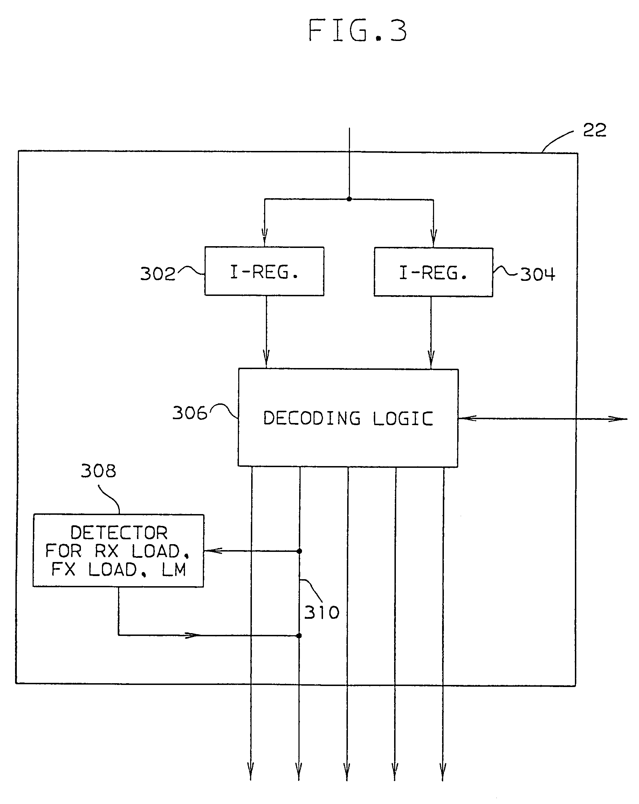

The instruction register/decoder section 22 of Fig. 1A is shown in more detail in Fig. 3. As is conventional, this section 22 includes one or more instruction registers 302, 304 connected to a decoder 306. The decoder 306 examines various fields of the instruction and generates control signals therefrom. The decoder 306 can be of a type that can decode two or more instructions simultaneously or of a more conventional type that decodes one instruction at a time.

By way of enhancement, the instruction register/decoder section 22 is also provided with detection logic 308. The detection logic 308 detects the decoding of any of a General Register RX Load (L), Floating Point Long RX Load (LD), or General Register RS Load Multiple (LM) instruction and generates a tag indicative of the fact that one of these instruction types have been decoded. The tag can be a single bit that indicates that one of the three instruction types has been detected. Alternatively, a multibit tag can be used to convey information identifying a specific one of the instructions.

Each instruction being decoded can have one or more register fields, each identifying an architected logical register. The register fields are sent from the decoding logic 306, to the register management system 32. In turn, the register management system 32 returns data identifying the physical registers which have been assigned to perform functions for the logical registers. This data, along with the tag, the instruction control bits (generated by the decoder 306 in a conventional manner), and the displacement (the D field in a system 370 type instruction) are sent on a multibit bus 310 to the address queue 60.

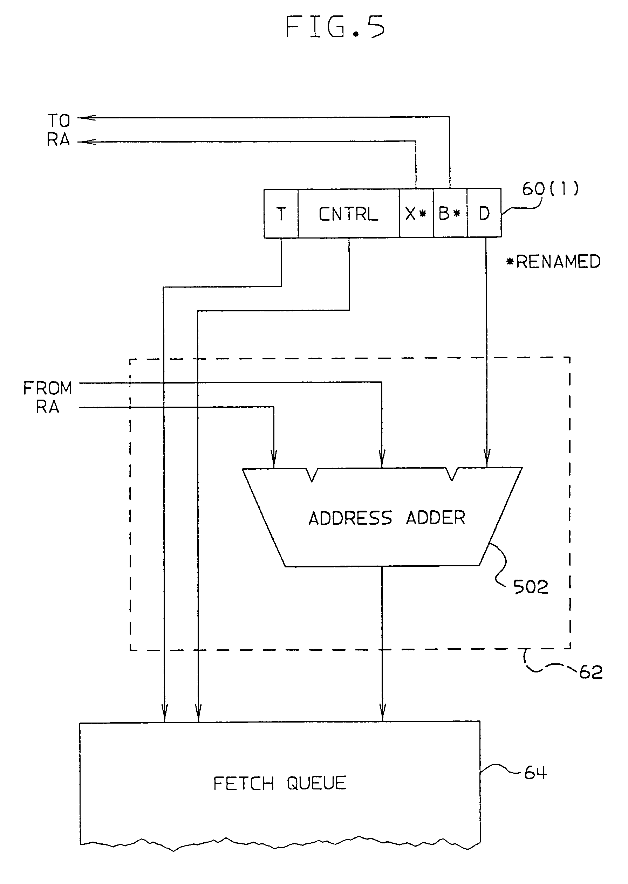

The address queue 60 and the Data ACE 62 are shown in more detail in Fig. 5. Each entry 60(1) in the address queue 60 includes the tag (T), the control information (CNTRL), the displacement (D) and the renamed index and base register addresses (X*, B*) as they appear in the RA 30. When an entry reaches is turn to be sent to the Data ACE 62, the renamed X and B register addresses (X*, B*) are sent to the register array, which responds by returning the index and base values contained in the corresponding physical registers.

The index and base values received from the RA are sent to the Data ACE 62. The Data ACE 62 includes an address adder 502, which adds the index and displacement values (received from the RA) to the displacement (received from the address queue). The sum of these values is an address, which is sent to the fetch queue 64, along with the tag and control information.

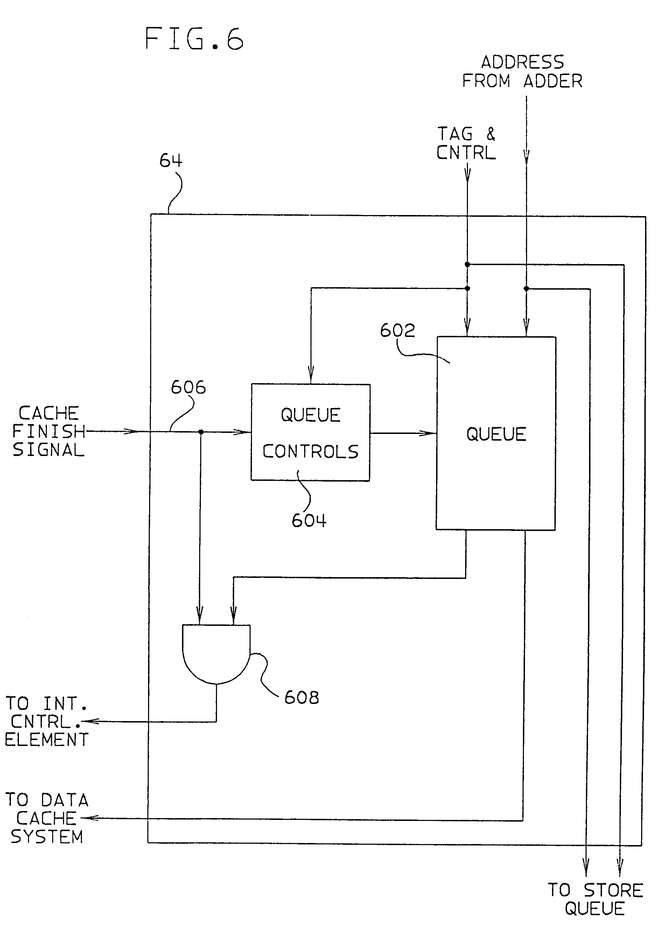

A more detailed diagram of the fetch queue 64 is provided in Fig. 6. The fetch queue, includes conventional queue logic 602 which receives the address computed by the Data ACE 62 and, in turn forwards it to the data cache system 18. The data cache system 18, uses the address to fetch the requested memory operands and deposits the fetched operand(s) directly into the assigned registers in the general register array 30 or floating point data registers 74, as appropriate. The data cache system has an output 606 connected to the fetch queue 64. When the data cache system 18 has completed its deposit of the operand, it sends a finish signal (on output 606) to the fetch queue controls 604 and to "AND" gate logic 608. The "AND" gate logic logically "AND"s the state of the finish signal (on 606) with the tag (T) of the instruction causing the fetch to determine whether the fetch was associated with an L, LD or LM instruction. When the "AND" gate logic determines that data for an L, LD and LM instruction has been fetched (ie. the tag is a logical one and the cache finish signal is a logical 1), it sends a signal to the interrupt control element 36 to indicate that the instruction is finished. The instruction finish signal from the output of the "AND" gate 608 is also sent to the RMS, which uses it to ensure that the DT bit remains at 0 and that the ACL is not updated when these instructions are finished.

Referring now to Fig. 2, the detailed structure of the register management system 32 is shown. A Decode Register Assignment List (DRAL) 100 is connected to incoming and outgoing status and control lines. Logic unit 101 is also connected to incoming and outgoing status and control lines for monitoring and controlling the contents of the DRAL. The DRAL is used when instructions are decoded to translate GPR assignments into register array (RA) assignments.

The DRAL may be organized in different ways. There may, for example, be more than one DRAL with multiple copies at each DRAL which contains one position for each GPR, and that position contains the number of the RA position that has been most recently assigned to receive value for that GPR. As each instruction is decoded, the GPRs it references are looked up in the DRAL to determine what RA positions are assigned to the GPRs, and as new RA positions are assigned to receive results, the DRAL is updated to reflect these assignments. In this way, each instruction which uses a GPR is directed by the DRAL to find the RA position which is assigned to the most recent instruction to reference that GPR.

Back-up Register Assignment Lists 102, 104 and 106 are connected to receive the entire contents of the DRAL 100 at particular points of operation. There is normally at least one BRAL in the system corresponding to each DRAL. The register management system could work with no BRALs if the system was allowed to wait for branch resolution. The use of one, two or three BRALs allows the processing of one, two or three conditional branches respectively, without waiting. It has the same structure as the DRAL, and is connected to it in such a way that in one cycle the entire contents of the DRAL may be copied into the BRAL, or vice versa. These transfers are controlled by logic unit 101. It is used, for example, when a conditional branch is encountered to save the contents of the DRAL in case the guess as to whether the branch taken is wrong.

An Array Control List (ACL) 110 is connected to receive status information and send control information from the RA and the rest of the computer system. Logic unit 101 controls the contents of ACL 110 and coordinates the operation of the ACL and the DRAL. For each of the RAs which support the GPRs there is an ACL register which remembers status information related to that RA. There is one entry for each register position in the array.

Turning now to Fig. 4, the ACL entries, in this embodiment, consist of 18 bits divided into six fields CTL, ABC, IID, PRV, REG and DT. The structure and function of the first five of these fields (CTL, ABC, IID, PRV and REG) are described in more detail in U.S. Patent 4,901,233. The CTL field comprises two bits of data which indicate one of the following array position status: AVAILABLE, ASSIGNED, PENDING AND NOT YET LOADED, PENDING AND LOADED. The DT field 402 is an enhancement which comprises a single bit of data. When set equal to 1, the DT field indicates the presence of pending intermediate data in a corresponding physical register.

As an alternative to the provision of a separate DT field, the CTL field can be expanded to 3 bits and the presence of "pending intermediate data" can be indicated by particular bit pattern, for example '100'. In this alternative, the bit patterns for the four above--described array position status can remain as shown in U.S. Patent 4,901,233 with the addition of a leading zero appended as the most significant bit.

The ACL can be used to recover the DRAL after an interrupt. During recovery, the DRAL is set over a period of several cycles by stepping a counter through each of the GPR addresses. As it steps through a new value each cycle, the value is compared against each of the ACL entries. This function can be accomplished by logic unit 101. A compare is detected if the REG field matches the value in the counter and the RA position is in the ASSIGNED state (CTL = "01"). Since there must be exactly one RA position assigned to each GPR, this compare process must produce a compare against exactly one RA position every cycle. The result of these compares is encoded to produce the number of the RA position, and these RA position numbers are sent to the DRAL and sequentially written into the DRAL entries. At the end of this process, each of the DRAL entries points to the PA position which is assigned to the GPR that that entry corresponds to respectively, which is the correct state for the DRAL.

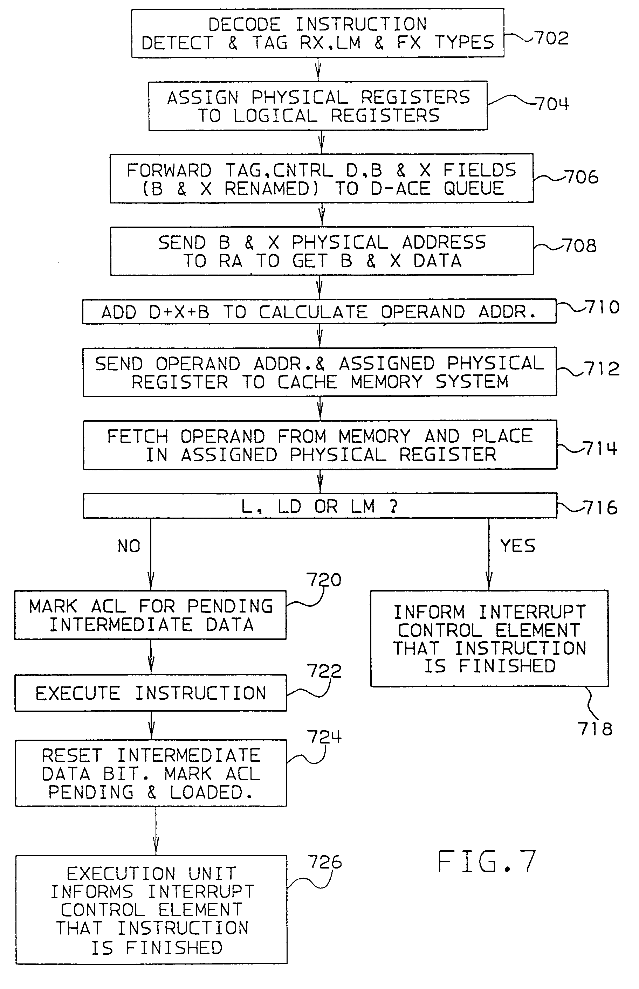

The operation of the system of Figs. 1A and 1B, with respect to storage operand management, will now be described in detail by reference to the flow chart of Fig. 7. Instructions, from the instruction buffers 20, are decoded (block 702) within the instruction register/decoder section 22. When an instruction that references a logical register is decoded, the register identifying fields are sent to the register management system 32. For instructions that reference an indexed storage location, the RMS 32 assigns each of the logical registers identified by the R1, B and X fields (displacement, base and index) to a respective physical register (block 704). When the detection logic 308 detects decoding of an L, LD or LM instruction, it generates a tag (e.g. a tag bit = 1). The renamed (assigned) X & B register address, displacement, control information and the tag (T) are sent to the address QUEUE 60 (block 706).

On request from the address QUEUE 60, the register array 30 sends the data stored within the renamed array positions to the DATA ACE 62 (block 708). The corresponding displacement, control information and tag is also forwarded from the address QUEUE 60 to the DATA ACE 62.

The DATA ACE 62 computes a data address by adding the displacement to the index and base returned from the register array (block 710). The address, so computed, is sent to the fetch queue 64, which, in turn, forwards it to the data cache system 14 (block 712).

The data cache system 18, uses the data address to fetch the requested memory operand(s) and deposits the fetched operand(s) directly into the assigned register(s) in the general register array 30 or floating point data registers 74, as appropriate (block 714). When the data cache system has completed its deposit of the operand(s), it signals the fetch queue 64 that the fetch is finished. The fetch queue 64 uses the tag (generated by the detection logic 308) to determine whether the fetch was associated with an L, LD or LM instruction (block 716). When the tag indicates that data for an L, LD and LM instruction has been fetched, the fetch queue 64 signals the interrupt control element 36 that the instruction is finished (block 718). In these cases, the RMS ensures that the state of the DT bit remains at 0 does not update the ACL.

For other RX type instructions, the data cache signals the RMS to set DT bit in the appropriate ACL entries to indicate the presence of pending intermediate data in the assigned registers(s) (block 720). The execution units use this bit to determine when the operand data is available (block 722). The DT bit is mutually exclusive with the pending and loaded condition of the ACL control field. Thus, this bit is reset by the RMS when the result data from the execution unit is loaded into the assigned physical register (block 724). Once the result has been loaded, the execution element informs the interrupt control element that the instruction execution is finished (block 726).

Several specific examples will now be described in order to better explain operation and advantages of the present invention.

CASE 1: An RR ADD Instruction

This case is presented only to provide a basis for comparison since no operand is fetched from storage, and therefore no buffer is needed. The instruction is in the form:

AR    R1,R2

where R1 and R2 designate architected registers, and the contents of R2 are to be added to the contents of R1 and the result placed in R1. Register management converts this into an internal form:

AR    A3,A1,A2

where A1, A2, and A3 designate array positions, with A2 designating the array position that contains the value in R2, and A1 and A3 respectively designating the array positions that contain the original and the newly generated values of R1. When the instruction executes, the values in A1 and A2 are read out, added, and the result is put in A3.

The controls which make this function will now be described by reference to Figs. 2 and 4. The DRAL (Decode-time Register Assignment List) 100 records where in the array each of the architected registers is to be found for the current point in the decoding process. Before decoding this instruction, the DRAL entry for R1 would have designated A1 as the array position which contains R1's value. As part of the decoding process, the DRAL is changed so that A3 is designated as the array position containing the R1 value. Then, when a later instruction comes along which wants the R1 value, the DRAL will direct it to A3.

The ACL (Array Control List) 110 contains status information about each position in the array. There is one entry in the ACL for each array position. As described earlier, each of the ACL entries include a PRV field which points to the array position which holds the preceding value of that architected register. An entry in the ACL is set at decode time when the array position is assigned to an instruction.

In the case of the above-described RR ADD instruction, the ACL entry for A3 is set at decode time, and the PRV field is set to point to A1 because that holds the previous value for R1 (the architected register that they are both assigned to). This PRV field is used when the instruction that had the array position assigned to it reaches completion. At completion time, the value which is in this array position becomes the "official" value for its architected register, the previous value of that register is no longer needed, and the array position which is holding that previous value can be made available for use by another instruction. The array position which is holding the previous value is found by looking in the PRV field, and the logic associated with completion goes to that array position and puts it back into the AVAILABLE state.

CASE 2: An RX ADD Instruction

In this case the second operand comes from a storage location. The instruction is in the form:

A    R1,D2(B2,X2)

where D2(B2,X2) address a storage location whose contents are added to the contents of R1 and the result is placed in R1. One alternative to handling the storage operand would be to build a structure to buffer the operand, and for a data path from that structure to multiplex with the output of the array so that either an operand from the array or a storage operand could be fed to the adder that will execute the instruction (depending on whether the instruction is an RR or an RX respectively). Instead, according to the teachings of the present invention, the array position which has been assigned to receive the final result is used as a buffer position for the storage operand. This saves the extra buffering structure and the multiplexing of its output with the output from the array, but it means that a second write port into the array needs to be provided so that the operand from storage can be written into the array when it arrives.

Therefore, the ADD instruction is converted into an internal form:

A    A3,A1,A3

where A1 and A3 designate array positions which respectively contain the original and newly generated values of R1. A3 is also used to buffer the storage operand fetched from D2(B2,X2). It is worth noting, that from the point of view of the execution element there is little if any difference between this instruction and the AR presented in case 1.

CASE 3: An RX LOAD Instruction

In this case an operand is moved from storage into a register without changing it. As in the previous case, an array position, A3, is selected to receive the final result, and is used to receive the operand directly from storage. However, since the value from storage is not changed, as soon as it is received from storage and placed in the array position the instruction is finished. This means that the RX LOAD instruction does not need an execution cycle, and in fact does not ever have to go to the instruction queue 31 (Fig. 1). All that happens is that the instruction is decoded, its address is calculated, a fetch is made from the data cache, and the resulting storage operand is written to the A3 position in the register array. The fetch queue 64 knows that this is a special case and also takes care of declaring that the instruction is finished). This improves performance by reducing the number of things that need to be done in the execution unit, and more importantly by making this value available for use by other instructions a cycle earlier than it otherwise would be available. Since RX LOAD is one of the most frequently used instructions this causes a noticeable improvement in performance.

CASE 4: An RX COMPARE Instruction

This instruction (and a few others such as MVI, CLI, TM, NI, OI, XI, CLCM) require special treatment because they do not change any register values, but do use operands from storage. Since they do not change any register values, in the normal course of events there would be no reason to assign an array position to receive the result of the instruction. However, since they fetch an operand from storage an array position is needed to use as a buffer. Therefore, in order to make an array position available for use as a buffer, one is assigned at decode time just as in case 2, and operation proceeds in almost the same way. One difference is that the DRAL is not updated to reflect any new register operands being generated by these instructions (because none are). The second difference is that when the ACL is set up for the array position that was assigned, the PRV field is set to point to itself. Then when completion time is reached for the instruction, and the array position pointed to by the PRV field is returned to the AVAILABLE state, this array position itself will be the one which is thus made available. Therefore, it is in use only for the lifetime of this instruction, and is not ever designated as holding a register value.

The application of the above-described principles to improve the performance of another type of computer system having register management facilities is illustrated in Figs. 8 through 10. In the computer system of Fig. 8, the decoder 802 examines instructions in sequence to determine the set of registers to be read and/or modified by each instruction. For each register to be read the decode register assignment list (DRAL) 804 is accessed to determine which physical register corresponds to the register number specified by the instruction. For each logical register to be modified, a new physical register is selected from the FREE STACK 806, passed along with the instruction to the execution unit (EX) 808 and written into the DRAL for subsequent instructions.

The Execution Logic 808 performs the operation specified by the instruction on the operands specified in terms of physical register IDs. Data is passed to and from the REGISTER POOL 810 using these IDs. As is conventional, the Execution Logic 808 can comprise a plurality of general and/or specialized execution elements. As will be explained in more detail with reference to Fig. 9, some of the execution elements can physically reside in the system's Instruction Unit, while other Execution Elements reside in the Execution Unit.

The completion logic (COMPL) 812 accepts instructions that have finished execution and, in instruction sequence, updates the completion register assignment list (CPAL) 814 to reflect the state of logical/physical register mapping at the time of instruction completion. Up until completion, any action taken by an instruction can be undone through a full or partial pipeline reset function. The architected state of the internal registers that are managed in this way is determined by the CPAL. The Completion Logic 812 also maintains an indicator bit that indicates when a register is being used as a temporary buffer for a storage operand. This bit is set by the decode logic when the instruction is decoded. When the completion logic is ready to complete an instruction, it checks the indicator bit.

If the indicator bit is on (indicating that the register is being used as a storage operand buffer) the completion logic retruns the register to the FREE STACK but does not update the CRAL. If the indicator bit is off, the register is returned to the FREE STACK and the CRAL is updated.

When a CRAL entry is updated, the "old" contents (physical registers whose contents have been changed in an architecturally consistent manner) are returned to the FREE STACK for reuse.

The register pool (RP) 810 is a read write stack of physical registers implemented in the processor to hold the contents of various architected internal registers. The most well known of these is the general purpose registers (GPRs), but any register that changes often enough to warrant backups can be included (e.g. Access Registers, certain Control Registers, Micro Registers). The register pool 810 is addressed by physical register IDs that result from reading the DRAL 804.

The decode register assignment list (DRAL) 804 of Fig. 8 has the same basic structure as the DRAL 100 of Fig. 2. The DRAL 804 supports the reads/writes necessary to decode two instructions per cycle (which for the IBM ESA/370 instruction set is 8 reads and 4 writes, worst case, along with a few variations for instructions such as Load Multiple). The DRAL 804 can also be updated in one machine cycle by any BRAL 816 or CRAL 814.

The CRAL 814 has the same basic structure has the DRAL 804. The CRAL 814 records the same information as the DRAL, but refers to Completion time as opposed to Decode time. The contents of the CRAL represent the architected state of the internal registers being managed by this mechanism and is used to initialize the DRAL on a pipeline reset.

Pipeline reset is the act of canceling all activity in the processor that is associated with instructions that have not yet completed. There are many facilities that must be reset. As related to register management in the system of Fig. 8, the DRAL 804 must be put in the state necessary to begin decoding the instruction prior to the instruction most recently completed. This is accomplished by simply writing the CRAL 814 back to the DRAL 804.

The backup register assignment list (BRAL) 816 of Fig. 8 has the same basic structure as function as the BRALs 102-106 of Fig. 2.

The FREE STACK 806 is a list of physical register IDs that are presently unused and are available to be allocated to an instruction being decoded. It can be implemented as a "push down stack" for cycle time reasons, but other functionally equivalent implementations can alternatively be used. When the CRAL is updated by an instruction that has completed, the physical register ID that is replaced in the CRAL is no longer needed by the instruction stream being executed and can therefore be given back to the FREE STACK 806 to be reallocated.

One advantage of the system of Figs. 8-10 is that the presence of the CRAL and the FREE STACK eliminates the need provide an ACL to maintain register availability and other status information.

Fig. 9 is a more detailed diagram showing the Cache and Instruction Unit portion of the system of Fig. 8. For purposes of discussion, the Instruction Element portion of the system can be considered to include the decode section 802, the register management section (elements 804, 806, 814, 816) and a portion of the Execution logic 808. The Instruction Unit is designed to execute the most commonly used portion of the instruction set, as quickly as possible, by providing multiple parallel execution units and by eliminating interlocks that prevent parallel execution. Register Management is an integral part of removing these interlocks.

Instructions are fetched from the cache 902 into and instruction buffer 904. The Parser and Instruction Register logic 906 parces out some number of instructions from the instruction buffer, for example, two instructions per cycle. These two instructions are then decoded and renamed by the Decode/Register management logic 908. The decoded instructions are then issued as follows:

1. All instructions that are not executed in the Instruction Unit are sent to appropriate execution elements within the system's Execution Unit (part of 808 in Fig. 8).

2. The Address Generation Element (AGEN) 910 generates operand addresses to send to the cache. In the preferred embodiment there are two AGENs, corresponding to two ports in the cache.

3. The IXE 912 is a high performance execution element that resides in the Instruction Unit. In the preferred embodiment, three IXEs are provided that operate independently and in parallel. The IXEs 912 are devoted exclusively to executing high frequency instructions that produce only single results (and Access Register General Purpose Register pairs).

4. The BPE 914 is dedicated to executing branch instructions and generates their respective branch addresses.

Each of the AGENs, IXEs and BPE has a copy of the register pool (RP) utilized by the register management system (See 810 in Fig. 8). This is to provide fast access to registers without a chip crossing. All copies of the register pool 916-920 in the Instruction Unit are kept in sync. There is another copy of the register pool in the Execution Unit that is always one cycle behind the Instruction Unit copies.

Interlocks are minimized by bypassing all IXE register data and all cache data to the execution portion of the AGENs, IXEs and BPE prior to writing the array (RP). The only time the register pool arrays are read is on the decode cycle. When an instruction is being issued to an execution element, the RP is read on the way in to the chip. Thereafter, register data is taken from the input busses from the cache and the IXEs.

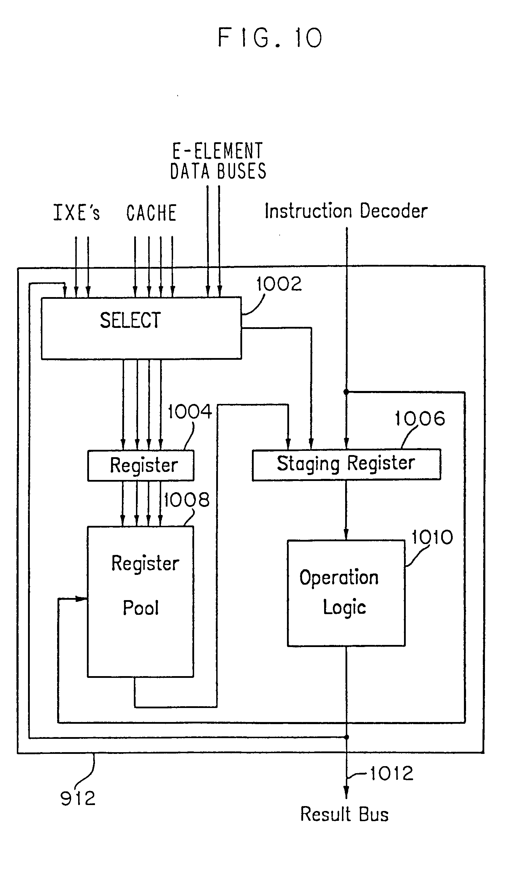

Fig. 10 is a more detailed diagram of an IXE chip. The AGENs and BPE are similarly constructed, having all of the major pieces shown in the diagram, but have some differences in the operation logic 1010 based on their function.

Input busses from the cache, Execution Unit and other IXE chips go through some SELECTion logic 1002 due to the limited number of write ports to the array. The selected busses are latched up in the register 1004 and are bypassed to the operation logic staging register 1006. The write of the Register Pool 1008 takes place on the next cycle, and the data is available to the Operation Logic 1008 as early as possible (no array read is necessary). The result from the IXE is available to all other IXEs, AGENs and the BPE at the same time, at the end of the cycle it is generated (ie it is a one cycle path from the operation logic of one chip to the staging registers of all other chips.

In the above-described design, the rationale for using a temporary register for storage operands is as follows. An RX format instruction typically needs to access the Cache and do some execution. Decode must, therefore, assign an AGEN as well as an IXE to a single RX instruction. If, at decode time, there were an AGEN available but no IXE, the AGEN could not be assigned and data could not be fetched since there would be no place for the data to go (the IXE has not yet been assigned). One would, therefore, need to wait for both and AGEN and an IXE to be available before stepping off the instruction. This has control and performance implications.

If, instead of directing the cache data to an IXE based on instruction ID, temporary registers are assigned to receive the data (ie. the storage operands), the AGEN and IXE functions become independent, thus removing the above restrictions.

In the system of Figs. 8-10, storage operand management is performed in the similar manner as for the system of Fig. 1 with a number of notable exceptions. In contrast with the array control list of the system of Fig. 1, the system of Figs. 8-10 uses the FREE STACK 806 to keep track of available registers. Thus, rather than marking a register specified in an instruction as holding "pending intermediate data", any available physical register can be assigned as a buffer. Once assigned as an operand buffer, physical register is merely removed from the free list until the instruction completes.

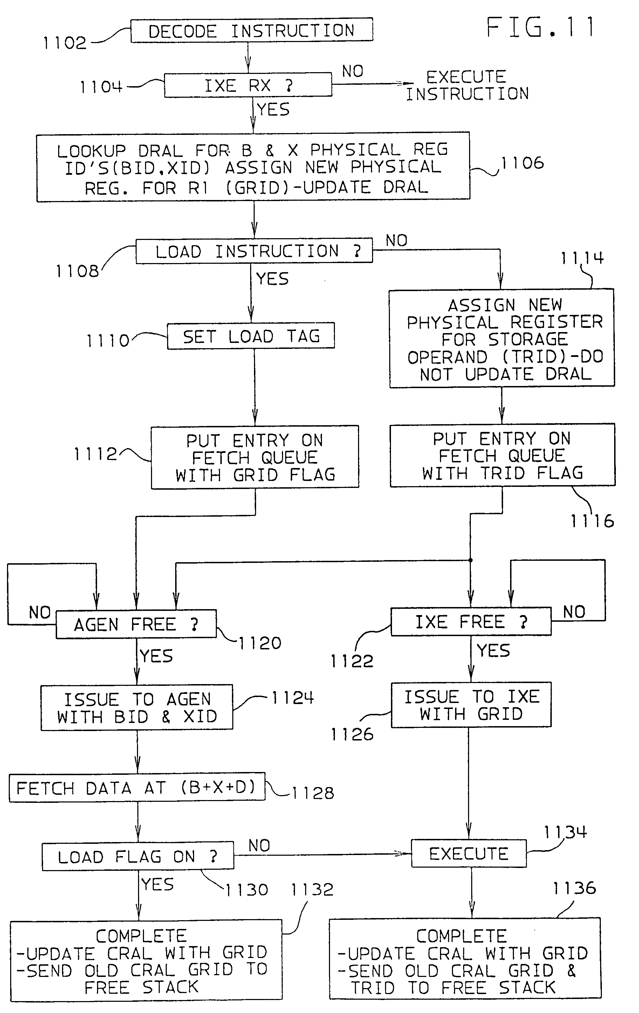

The process for performing storage operand management in the system of Figs. 8-10 is illustrated in more detail in the flow chart of Fig. 11.

When an instructions is decoded 1102 it is determined 1104 whether it is an RX type. If the instruction is not an RX instruction it is executed in the manner described previously with respect to Figs. 8-10. If the instruction is an RX type instruction, its logical register references are looked up in the DRAL to determine physical register assignments 1106. For purposes of this example, we will assume that the decoded instruction is of a type that will be executed by the IXE.

The decoder also determines if the the RX type instruction is a "load" type instruction 1108. If the instruction is a load, the decoder sets a tag 1110 so indicating and makes the entry on to the fetch queue 1112 with the identity (GRID) of the physical register assigned to receive the results from memory as the return tag.

If the instruction is not a load instruction, a new physical register is assigned 1114 as a temporary storage place for the storage operand. The identity (TRID) of this assigned physical register is removed from the FREE STACK, and no entry is made in the DRAL. An entry is also made in the fetch queue 1116 with the TRID as the return tag for the storage operand.

The system next determines whether the AGEN and IXE are free 1120, 1122, and if so, the system issues the address generation/operand fetch part and the execution part of the instruction to the AGEN and IXE, respectively 1124, 1126. If one or both units are not free, the system will issue the appropriate fetch and execution parts as they become available. If the instruction is a load, no IXE operations are required.

The AGEN generates the storage address $(B + X + D)$ and fetches it from the cache (at 1128). The operand is fetched and returned with the TRID of GRID, as appropriate.

If the load flag was on (determined at 1130), the cache will issue a finish report and completion can proceed 1132. If the instruction was not a load and execution is required, the IXE will receive the operand tagged with the TRID, do the execution 1134, and issue the finish report. In this case, the completion logic must know not to update the CRAL 1136 based on retiring the TRID register.

While the invention has been described with reference to the preferred embodiments thereof, various modifications and changes may be made to those skilled in the art without departing from the true spirit and scope of the invention as defined by the claims hereof.

## Claims

1. Computer system having a system memory, m architected logical registers and an array of n physical registers, where n is greater than m, a method of managing storage operands characterized by the steps of:

   detecting the decoding of an instruction having at least one field specifying a storage operand;

   identifying an available one of the physical registers (30);

   fetching the storage operand from the system memory (12);

   loading the storage operand into the available one of the physical registers (30); and

executing the instruction, using the storage operand stored in the one of the physical registers (30).

2. Computer system, characterized by

   a system memory (12),

   an array of n physical registers (30) in a system architecture comprising m logical registers, n being greater than m;

   first means for detecting the decoding of an instruction having at least one field specifying a storage operand;

   second means, coupled to the array of n physical registers, for identifying an available one of the physical registers;

   third means, coupled to the system memory, for fetching the storage operand from the system memory;

   fourth means, coupled to the first, second and third means, for loading the storage operand into the available one of the physical registers;

   fifth means, coupled to the fourth means, for maintaining a correlation between the at least one field specifying the storage operand and the available one of the physical registers; and

   sixth means, coupled to the array of n physical registers and the fifth means, for executing the instruction using the available one of the physical registers as a source for the storage operand specified by the at least one field.

3. Computer system according to claim 2, characterized by the steps of:

   detecting the decoding of a register load instruction having at least one field specifying a storage operand;

   identifying an available one of the physical registers;

   fetching the storage operand from the system memory;

   loading the storage operand into the available one of the physical registers; and

   bypassing execution of the instruction.

4. Computer system according to one of claims 1-3,
characterized by

first means for detecting the decoding of an instruction having at least one field specifying a storage operand, said first means further including indicating means for indicating a type of instruction which has been decoded;

second means, coupled to the array of n physical registers, for identifying an available one of the physical registers;

third means, coupled to the system memory and the first means, for fetching the storage operand from the system memory;

fourth means, coupled to the first, second and third means, for loading the storage operand into the available one of the physical registers; and

an execution unit, coupled to the array of n physical registers, and to the first means;

said third means further comprising, bypass means for bypassing said execution unit when the indicating means indicates that a register load instruction has been decoded.

FIG.1A

# FIG.1B

# FIG.2

# FIG.4

| CTL | ABC | IID | PRV | REG | DT |
|-----|-----|-----|-----|-----|-----|
| 1 | 2 | 5 | 10 | 14 | 18 | 19 |

# FIG.3

302 I-REG.  I-REG. 304

306 DECODING LOGIC

308

DETECTOR
FOR RX LOAD,
FX LOAD, LM

310

22

# FIG.5

*RENAMED

FIG.6

ADDRESS
FROM ADDER

TAG &
CNTRL

64

602

606

CACHE
FINISH
SIGNAL

QUEUE
CONTROLS

QUEUE

604

608

TO INT.
CNTRL.
ELEMENT

TO DATA
CACHE
SYSTEM

TO STORE
QUEUE

DECODE INSTRUCTION
DETECT & TAG RX,LM & FX TYPES ——702

ASSIGN PHYSICAL REGISTERS
TO LOGICAL REGISTERS ——704

FORWARD TAG,CNTRL D,B & X FIELDS
(B & X RENAMED) TO D-ACE QUEUE ——706

SEND B & X PHYSICAL ADDRESS
TO RA TO GET B & X DATA ——708

ADD D+X+B TO CALCULATE OPERAND ADDR. ——710

SEND OPERAND ADDR.& ASSIGNED PHYSICAL
REGISTER TO CACHE MEMORY SYSTEM ——712

FETCH OPERAND FROM MEMORY AND PLACE
IN ASSIGNED PHYSICAL REGISTER ——714

L, LD OR LM ? ——716

NO | YES

MARK ACL FOR PENDING
INTERMEDIATE DATA ——720

INFORM INTERRUPT
CONTROL ELEMENT
THAT INSTRUCTION
IS FINISHED ——718

EXECUTE INSTRUCTION ——722

RESET INTERMEDIATE
DATA BIT. MARK ACL
PENDING & LOADED. ——724

EXECUTION UNIT
INFORMS INTERRUPT
CONTROL ELEMENT
THAT INSTRUCTION
IS FINISHED ——726

FIG.7

19

FIG. 8

# FIG. 9

Cache — 902

Instruction Buffer — 904

Parser and I-Regs — 906

Decode/RM — 908

E-UNIT

RP 916 — AGEN 910

RP 918 — IXE 912

RP 920 / 914 — BPE

Address to Cache

I-Fetch to Cache

F I G. 10

FIG.11

1102 — DECODE INSTRUCTION

1104 — IXE RX ? — NO → EXECUTE INSTRUCTION

YES

LOOKUP DRAL FOR B & X PHYSICAL REG ID'S (BID,XID) ASSIGN NEW PHYSICAL REG. FOR R1 (GRID)-UPDATE DRAL — 1106

1108 — LOAD INSTRUCTION ? — NO

YES

1110 — SET LOAD TAG

1114 — ASSIGN NEW PHYSICAL REGISTER FOR STORAGE OPERAND (TRID)-DO NOT UPDATE DRAL

1112 — PUT ENTRY ON FETCH QUEUE WITH GRID FLAG

PUT ENTRY ON FETCH QUEUE WITH TRID FLAG — 1116

NO — AGEN FREE ? — 1120

YES

ISSUE TO AGEN WITH BID & XID — 1124

FETCH DATA AT (B+X+D) — 1128

LOAD FLAG ON ? — NO

YES — 1130

1122 — IXE FREE ? — NO

YES

ISSUE TO IXE WITH GRID — 1126

EXECUTE — 1134

1132

COMPLETE
-UPDATE CRAL WITH GRID
-SEND OLD CRAL GRID TO FREE STACK

1136

COMPLETE
-UPDATE CRAL WITH GRID
-SEND OLD CRAL GRID & TRID TO FREE STACK